(19) **Europäisches Patentamt / European Patent Office / Office européen des brevets**

(11) **EP 2 713 609 B1**

(12) **EUROPEAN PATENT SPECIFICATION**

(45) Date of publication and mention
of the grant of the patent:
**06.05.2015 Bulletin 2015/19**

(21) Application number: **12186600.8**

(22) Date of filing: **28.09.2012**

(51) Int Cl.:
*H04N 5/28* (2006.01)    *H04N 5/262* (2006.01)
*H04N 21/218* (2011.01)    *H04N 21/2187* (2011.01)
*H04N 21/414* (2011.01)    *H04N 21/41* (2011.01)
*H04N 21/234* (2011.01)    *H04N 21/2343* (2011.01)
*H04N 21/242* (2011.01)    *G11B 27/10* (2006.01)
*H04N 21/8547* (2011.01)    *G11B 27/031* (2006.01)

(54) **Dynamic delay handling in mobile live video production systems**

Dynamische Verzögerungshandhabung in mobilen Echtzeitvideo-Herstellungssystemen

Manipulation de retard dynamique dans des systèmes de production vidéo en direct

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.04.2014 Bulletin 2014/14**

(73) Proprietor: **Stockholms Universitet Holding AB**
**106 91 Stockholm (SE)**

(72) Inventors:
• **Mughal, Mudassir Ahmad**
**170 70 Solna (SE)**
• **Juhlin, Oskar**
**125 58 Älvsjö (SE)**
• **Engström, Arvid**
**112 62 Stockholm (SE)**

(74) Representative: **Kitzler, Michael**
**IPQ IP Specialists AB**
**Docketing**
**Box 42**
**683 21 Hagfors (SE)**

(56) References cited:
**EP-A1- 2 403 236**    **US-A1- 2002 170 067**

• **ARVID ENGSTROM ET AL: "Producing collaborative video", PROCEEDING OF THE 1ST INTERNATIONAL CONFERENCE ON DESIGNING INTERACTIVE USER EXPERIENCES FOR TV AND VIDEO, UXTV '08, 1 January 2008 (2008-01-01), pages 115-124, XP055052614, New York, New York, USA DOI: 10.1145/1453805.1453828 ISBN: 978-1-60-558100-2**
• **ELHAJJ I H ET AL.: "Real-Time Adaptive Content-Based Synchronization of Multimedia Streams", ADVANCES IN MULTIMEDIA, vol. 2011, 914062, 31 December 2011 (2011-12-31), pages 1-13, XP002691727, DOI: 10.1155/2011/914062**

**Description**

TECHNICAL FIELD

Generally, embodiments of the invention relate to the technical field of mobile video mixing, or mobile collaborative live video production.

More specifically, different embodiments of the application relate to mixing of live video signals, and handling of dynamic delay during such mixing, in a mobile video production system.

BACKGROUND AND RELATED ART

In recent years the provision of high speed mobile networks together with the advanced mobile phones with cameras, have given rise to a new generation of mobile live video streaming services that, in turn, has opened a new avenue of mobile live video production. Most live mobile video production services and applications today are limited to a single mobile camera as a source for video production. However, lately, the demand for more extended resources for amateur storytelling, which resemble professional TV production technology, have been discussed, see for example the articles "Mobile broadcasting - The whats and hows of live video as a social medium", A. Engstrom, O. Juhlin, and E. Reponem, (2010), In Proc of Mobile HCI 2010, September 7-10, Lissabon, Portugal and "Amateur Vision and Recreational Orientation: creating live video together", Engström A., Perry M., Juhlin, O. (2012), in proc. of CSCW 2012 Seattle.

To fill this gap there is an emerging class of applications that focuses on enabling collaborative resources in live video production, for example where groups of amateurs work together to provide a rich broadcast of events. These applications may for example allow users to produce videos through collaboration using for example multiple mobile cameras, similar to the way professional live TV production teams work. Previously, video quality attributes, such as frame rate and resolution, of the mobile systems have been the most critical issue. However, these problems will diminish as mobile Internet with higher bandwidths, such as 4G, becomes more established. However, as this first and most apparent level of problems with regard to quality in these services is overcome, a new set of challenges arises, including problems relating to expected delays in video transmissions.

Delay is an inherent feature in all forms of signal transmission, but some forms of delay are more critical than others to the perceived quality of the transmission. In professional live TV production there is a delay of a couple of seconds between the time instances of an occurring event and the time instance when a transmission of the captured event reaches the end user, for example being represented by viewers in their homes. This divergence is almost never experienced as a problem. However, in the actual production situation, i.e. when two or more video systems are collaboratively tied together, the demands on low delays and synchronization are very high. When streaming over the Internet, mobile networks and other communication networks, as is the case for mobile collaborative live video production systems, problems with synchronization and disturbance of live experiences often occur due to delays.

The inventors have identified two types of problems which affect the mixing of the video streams: the difference in delay in multiple streams, also referred to as asynchrony among streams, and the delay between the imaged scene, or event, per se and its presentation to the user of a mobile video mixing system, at the mixer.

For professional live TV production systems, delays are minimized by using high speed dedicated media for video transmission and specialized hardware to synchronize multiple cameras. Such specialized and expensive solutions are not adaptable to mobile collaborative live video production systems comprising for example multiple mobile cameras, possibly having different properties, and wherein video data transmitted is performed over communication networks that may have limited available bandwidth. Mobile collaborative live video production systems present similar challenges in synchronization among multiple camera feeds and delays in the video transmission from one point to another, compared to professional live TV production systems for two reasons: First, since customized professional production technology is not available for mobile collaborative live video production systems there will be big delays occurring, which will in turn affect the experienced "liveness" of the video transmission. This, in turn, will negatively affect the video production process. Herein after, the term "liveness" refers to qualities related to the perceived immediacy of a video transmission and its presentation to end users or viewers. Secondly, due to the architecture of the Internet the delay from each camera is potentially going to be different which will result in asynchrony in the live feeds, presented to the mixer. This asynchrony will affect the multi-viewing and lead to problems for producers.

Examples of related art aiming at diminishing one or more of the above stated problems are found in the following documents:

EP2403236 A1, also referred to as document D1, describes a mobile mixing system where a node acting as a mixer/director may select from a set of video streams. D1 is directed towards mobility and reduced complexity, e.g. by allowing readily available cellular phones as video generating sources and producer tools and a highly mobile video mixer able to connect via a relatively low bandwidth wireless network and a relatively high bandwidth http network, such as a LAN at a hotel. A working system for collaborate video production can quickly be set up on various geographical locations with low complexity and low costs by bringing cellular phones and a video mixer to a new geographic location and configure the system to the video server. However, D1 does not teach a solution as to how to address the problem of the delay between the imaged scene, or event, per se and its presentation to the user of a mobile video mixing system, at the mobile mixer.

US2002/170067 A1, also referred to as document D2, relates to a stationary mixer system that can receive input video streams from ip-based networks and/or from recorder media and can selectively broadcast one of the pluralities of incoming live video streams in real time. However, D2 does not teach a solution as to how to address the problem of the delay between the imaged scene, or event, per se and its presentation to the user of a mobile video mixing system, at the mobile mixer.

ARVID ENGSTROM ET AL: "Producing collaborative video".PROCEEDING OF THE 1ST INTERNATIONAL CONFERENCE ON DESIGNING INTERACTIVE USER EXPERIENCES FOR TV AND VIDEO. UXTV 108.1 January 2008 (2008-01-01). Pages 115-124, New York. New York. USA, also referred to as document D3, describes a mobile mixing system where a node acting as a mixer/director may select from a set of video streams. D3 discuss briefly how a particular video stream from the set may be selected based on the position of the video generating device or camera. However, D3 does not teach a solution as to how to address the problem of the delay between the imaged scene, or event, per se and its presentation to the user of a mobile video mixing system, at the mobile mixer.

ELHAJJ I H ET AL.: "Real-Time Adaptive Content-Based Synchronization of Multimedia Streams". ADVANCES IN MULTIMEDIA. vol. 2011. 914062.31 December 2011 (2011-12-31). pages 1-13, also referred to as Document D4 relates to synchronizing video streams based on their content, in particular with the purpose of synchronizing audio and related video. However, D4 does not teach a solution as to how to address the problem of the delay between the imaged scene, or event, per se and its presentation to the user of a mobile video mixing system, at the mobile mixer.

The article "Real-Time Adaptive Content-Based Synchronization of Multimedia Streams", Elhajj et al., Hindawi Publishing Corporation, Advances in Multimedia, Volume 2011, Article ID 914062. The article relates to frame rate control.

Other examples of related art are found in the following publications: WO 2011/017460 A1, relating to buffering when utilizing the Internet capability in mobile devices/networks to deliver broadcast multimedia to a device; and CN 101662676 A and CN101600099, both relating to the use of buffering in order to synchronize streaming media.

However, none of the related art relates to the problems, or discloses the solutions, of the present invention.

SUMMARY

The inventors have identified two problems generated by end-to-end video delays in mobile collaborative live video production. First, end-to-end delays, which in professional systems are of no consequence because of the separation between a depicted scene or event and the production environment, turns out to be a source of confusion for mobile systems, since a producer can often choose between looking at the depicted scene or event per se or at the broadcasts of it, when making broadcast decisions or selections. The time for the actual selection of a cut, as decided by looking at the depicted scene or event per se, may therefore not be aligned with the video stream in the system. Secondly, if all the cameras used in a mobile collaborative live video production system are depicting, for instance filming, the same scene or event from different angles, which is likely in collaborative production, the inter-camera asynchrony also becomes a serious issue.

In other words, there are two types of problems that affect the mixing of the video streams: the difference in delay in multiple streams, also referred to as asynchrony among streams, and the delay between an imaged scene, or event, per se and its presentation to the user of a mobile video mixing system, at the mixer. We propose the introduction of a delay software feature where these requirements are balanced differently to fit with specific contexts of use.

The present invention relates to methods and systems for mobile collaborative live video production, wherein the above identified problems are solved, or at least minimized as defined by the features of claims 1 and 5.

In an embodiment, there is provided a method for mixing of image frame sequences depicting a scene or an event, using a mobile video mixing system, the method comprising: receiving an image frame sequence from a first video source; receiving an image frame sequence from a second video source; mixing the received video frame sequences, wherein the mixing further comprises, at each time instance: receiving or retrieving a parameter representing the context of the use of the mobile video mixing system; selecting a video mixing mode, from a selection of at least two different video mixing modes, dependent on the received or retrieved context parameter; and mixing the received video frame sequences according to the selected video mixing mode.

According to an embodiment, the different video mixing modes involve the use of different synchronization techniques.

According to an embodiment, selecting a video mixing mode comprises: determining whether the mobile video mixing is performed in view or out of view of the depicted scene or event, dependent on the received or retrieved context parameter; and

- selecting a first video mixing mode if the context parameter indicates that the mobile video mixing is performed in view of the depicted scene or event; or
- selecting a second video mixing mode if the context parameter indicates that the mobile video mixing is performed out of view of the depicted scene or event.

According to an embodiment, the first video mixing mode involves frame rate control.

According to an embodiment, the second video mixing mode involves buffering of video frames.

According to an embodiment, the context parameter is generated in response to a selection of the following: receiving user input via one or more inputters integrated in, coupled to, or configured to transfer information to the mobile video mixing system; receiving positioning information from a positioning device integrated in, coupled to or configured to transfer information to the mobile video mixing system; and/or receiving light or audio information relating to the context of the use of the mobile video mixing system from one or more sensor integrated in, coupled to, or configured to transfer information to the mobile video mixing system.

According to an embodiment, the method comprises calculating and compensating for the synchronization offset between a reference clock and image frames received from the first video source and the second video source, respectively.

According to an embodiment, the method comprises calculating and compensating for the synchronization offset between two corresponding image frames received from the first video source and the second video source, respectively.

In an embodiment, there is provided a mobile video mixing system for mixing of image frame sequences depicting a scene or an event, the system comprising: a first video source configured to capture a first image frame sequence; a second video source configured to capture a second image frame sequence; a mixer node comprising a first receiver and a second receiver configured to receiving image frames from said first video source and said second video source, respectively, wherein the mixer node is configured to enable a central user to perform video mixing in real time using one or more inputters integrated in, coupled to, or configured to transfer information to the video mixing system; wherein the mixer node is further configured to, for each time instance: receive or retrieve a parameter representing the context of the use of the mobile video mixing system; select a video mixing mode, from a selection of at least two different video mixing modes, dependent on the context parameter; and mix the received image frames sequences according to the selected video mixing mode.

According to an embodiment, the system further comprises a synchronization manager configured to synchronize the received image frame sequences before mixing.

According to an embodiment, the mixer node is further configured to: determine whether the mobile video mixing is performed in view or out of view of the depicted scene or event, dependent on the context parameter; and selecting a first video mixing mode if the mobile video mixing is performed in view of the depicted scene or event; or selecting a second video mixing mode if the mobile video mixing is performed out of view of the depicted scene or event.

According to an embodiment, the first video mixing mode involves frame rate control, and the synchronization manager is configured to synchronize the received video frame sequences using frame rate control if the first video mixing mode is selected.

According to an embodiment, the second video mixing mode involves buffering of video frames, and the synchronization manager is configured to synchronize the received video frame sequences using buffering if the second video mixing mode is selected.

According to an embodiment, the video mixing system is configured to generate the context parameter by: receiving user input via one or more inputters integrated in, coupled to, or configured to transfer information to the mobile video mixing system; receiving positioning information from a positioning device integrated in, coupled to or configured to transfer information to the mobile video mixing system; and/or receiving light or audio information relating to the context of the use of the mobile video mixing system from one or more sensor integrated in, coupled to, or configured to transfer information to the mobile video mixing system.

According to an embodiment, the synchronization manager is configured to calculate and compensate for the synchronization offset between a reference clock and image frames received from the first video source and the second video source, respectively.

According to an embodiment, the synchronization manager is configured to calculate and compensate for the synchronization offset between two corresponding image frames received from the first video source and the second video source, respectively.

According to an embodiment, the first video source and the second video source are mobile phone cameras.

According to an embodiment, the mixer node is configured to control display of the final mixed video output, by transferred the video output through broadcast or streaming over a communications network to a remote output.

In an embodiment, there is provided a non-transitory computer readable memory comprising computer program code that, when executed in a processor, is configured to perform any or all of the method steps described herein.

BRIEF DESCRIPTION OF DRAWINGS

Embodiments of the invention will now be described in more detail with reference to the appended drawings, wherein:

Fig. 1 shows a schematic view of a mobile collaborative video mixing system according to embodiments.

Figs. 2a and 2b show flow diagrams of method embodiments.

Fig. 3a is a graph representing the relation between delay and asynchrony according to embodiments.

Fig. 3b is a graph representing the relation between smoothness and asynchrony according to embodiments.

Fig. 4 shows a schematic overview of a system for buffering according to embodiments.

Fig. 5 shows a schematic overview of system embodiments wherein image frames are transmitted at a static frame rate.

Fig. 6 illustrates transmission of data at two different frame rates.

Fig. 7 shows a schematic overview of system embodiments using frame rate dropping.

Fig. 8 shows a method for calculation of synchronization offset according to an embodiment.

Fig. 9 shows a flow diagram of a frame rate control method according to embodiments.

DETAILED DESCRIPTION

*Introduction*

Embodiments of the present invention comprise systems and methods for mobile collaborative live video production. According to embodiments, the systems and methods presented herein are connected to three user roles; local users - sometimes referred to as camera persons-capturing image or video content using imaging devices such as cameras; a central user- such as a director - receiving the image or video content from the local users and synchronizing, mixing or in other way processing the received image or video content; and end users or viewers having access to devices or applications to which the processed content is delivered, typically via a communication network such as the Internet, a mobile network and another suitable communication network.

*Use case embodiment*

According to embodiments, local users, or camera persons, operate mobile phones or other local units or devices having video capturing capabilities, to capture a scene, object or event of interest. According to embodiments, mobile collaborative live video production systems may for example support up to four different live feeds, but the methods and systems presented herein may of course be applied to any number of live feeds. In an embodiment, the director is enabled to view received live video feeds and control the production or mixing of the live feeds using a mixer console. According to embodiments, the mixer console shows all the received live feeds at the same time in either one or several separate windows, meaning that the director is enabled to "multi view" all available received video content. The director decides, on a moment by moment basis, which live feed to select for the live broadcast. In an embodiment, the operator is enabled to select a live feed for broadcast based on the displayed "multi view" of received live feeds. After the director has made a selection, the selected live feed is broadcast, whereby one or more end users, or viewers, consume the final video output in real time, based on the director's selection.

*System architecture*

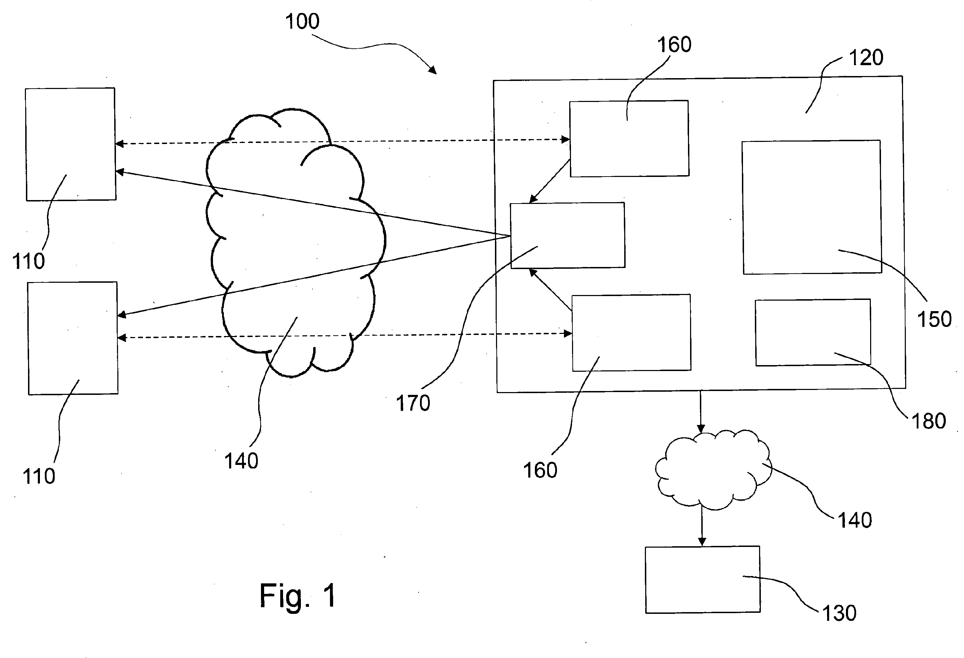

Fig. 1 shows a schematic view of a mobile collaborative video mixing system 100 according to embodiments, wherein two or more local mobile devices 110 captures and streams live video to a mixer node 120 over a communication network 140, for example the Internet or a mobile wireless network, such as 3g, 4g or Wi-Fi.
In an embodiment, there is provided a mobile video mixing system for mixing of image frame sequences depicting a scene or an event, the system comprising: first video source configured to capture a first image frame sequence; a second video source configured to capture a second image frame sequence; and a mixer node comprising a first receiver and a second receiver configured to receiving image frames from said first video source and said second video source, respectively, wherein the mixer node is configured to enable a central user to perform video mixing in real time using one or more inputters integrated in, coupled to, or configured to transfer information to the video mixing system. The mixer node may further be configured to, for each time instance: receive or retrieve a parameter representing the context of the use of the mobile video mixing system; select a video mixing mode, from a selection of at least two different video mixing modes, dependent on the context parameter; and mix the received image frames sequences according to the selected video mixing mode. The phrase each time instance refers herein either to each time the mixer node receives a video frame from video source, each time the mixer node has received a preset number of video frames from a video source, or at other determined time instances, for example separated by preset time intervals.

In embodiments, the video mixing system is configured to generate a context parameter by:

- receiving user input via one or more inputters integrated in, coupled to, or configured to transfer information to the mobile video mixing system;
- receiving positioning information from a positioning device integrated in, coupled to or configured to transfer information to the mobile video mixing system; and/or
- receiving light or audio information relating to the context of the use of the mobile video mixing system from one or more sensor integrated in, coupled to, or configured to transfer information to the mobile video mixing system; and generating the context parameter based on the received user input, positioning information, light information and/or audio information. A processor integrated in, connected to or communicatively coupled to the mixer node 120 maybe configured to generate a context parameter, in response to the mixer node 120 receiving a selection of the information listed above. According to an embodiment, the processing functionality for generating a context parameter is integrated in the synchronization manager 170. According to another embodiment, the context parameter is set to the value received or retrieved from the user input, positioning device or light and/or audio sensor, and processing functionality of the mixer node 120 is further configured to interpret the context parameter and determine the context of use of the video mixing system. The context of use of the video mixing system in the sense of the inventive concept relates to whether the video mixing is performed in view or out of view of a depicted object, scene or event. The contexts "in view" mixing and "out of view" mixing and adaptations of the inventive method and system for the different contexts are further described in connection with the figures.

According to an embodiment, the mixer node comprises one or more interaction devices 180, configured to receive user input and generate control signals for controlling different aspects of the video processing and/or mixing based on the received user input.

According to an embodiment, the mixer node 120 may comprise one or more receivers 160; typically the mixer node 120 comprises at least two receivers 160, for receiving live video feeds from the two or more local output devices 110, as illustrated by the dotted lines in Fig. 1. The mixer node 120 may further comprise a local output device 150 for outputting the two or more live video feeds received from the two or more local mobile devices 110. Through the local output device 150, a central user such as a director is enabled to view the live video feeds and decide, on a moment by moment basis, which live feed to select for the live broadcast.

According to embodiments, the video streaming may be performed using any known format, or any suitable codec or container that allows variable frame rate. An example of a codec that is suitable for mobile streaming according to an embodiment is H.264, which offers higher quality using lower bandwidth as compared to some other video encoding standards presently on the market. As is apparent to a person skilled in the art, the methods and systems described herein may be adaptable for use also with future formats, codecs or containers that are not known at the time of writing this application.

For transportation of data in the system 100 and communication between components, for example between the mixer node 10 or the synchronization manager 170 and the local units 110, Real-Time Transport Protocol (RTP) in conjunction with Real-Time Transport Control Protocol (RTCP) may for example be used.

According to an embodiment, the mixer node 120 is a processing device that is running the software that receives live streams from local user devices 110, and that enables a central user, such as a mixer, director or producer, to perform several video mixing decisions or selections in real time, or in other words live. According to an embodiment, the local user devices 110 are mobile phone cameras. According to embodiments, the mixer node 120 controls display of the final video output, which is transferred through broadcast or streaming over a communications network 140 to a remote output 130 and displayed on a display device of the local output 130. The broadcast transmission of the final video output live to an end user terminal may for example be performed using a remote machine or web-server via the Internet, IP networks, a mobile communication networks or any other suitable communication network 140.

According to an embodiment, the mixer node is configured to determine whether the mobile video mixing is performed in view or out of view of the depicted scene or event, dependent on the context parameter; and selecting a first video mixing mode if the mobile video mixing is performed in view of the depicted scene or event; or selecting a second video mixing mode if the mobile video mixing is performed out of view of the depicted scene or event.

If the live streams, or live feeds, from the more than one cameras of the mobile collaborative video mixing system 110 are delayed and out of sync, this causes serious problems for the director who is mixing the live video feeds at the mixer node or mixer console 120. Therefore, according to embodiments presented herein, the mixer node 120 may further comprise a synchronization manager 170. In an embodiment, the synchronization manager is configured to synchronize the received image frame sequences before mixing.

According to an embodiment, the first video mixing mode involves frame rate control, and the synchronization manager is configured to synchronize the received video frame sequences using frame rate control if the first video mixing mode is selected. According to an embodiment, the second video mixing mode involves buffering of video frames, and the synchronization manager is configured to synchronize the received video frame sequences using buffering if the second video mixing mode is selected.

According to an embodiment, the video mixing system is configured to generate a context parameter by: -

- receiving user input via one or more inputters integrated in, coupled to, or configured to transfer information to the mobile video mixing system;
- receiving positioning information from a positioning device integrated in, coupled to or configured to transfer information to the mobile video mixing system; and/or
- receiving light or audio information relating to the context of the use of the mobile video mixing system from one or more sensor integrated in, coupled to, or configured to transfer information to the mobile video mixing system; and

generating the context parameter based on the received user input, positioning information, light information and/or audio information.

According to an embodiment, the synchronization manager is configured to calculate and compensate for the synchronization offset between a reference clock and image frames received from the first video source and the second video source, respectively. According to another embodiment, the synchronization manager is configured to calculate and compensate for the synchronization offset between two corresponding image frames received from the first video source and the second video source, respectively.

It is further worth noticing that feedback between the different parts of the system 100, for example between the local units 110 and the central device 120, or between the remote output device 130 and the central device 120, influences production and may increase delay. From this we can infer that the higher the level of collaboration, the more complex the delay effect is.

The system of any of the claims 9-17, wherein the mixer node is further configured to control display of the final mixed video output, by transferred the video output through broadcast or streaming over a communications network to a remote output.

In an embodiment, the first video source and the second video source are mobile phone cameras.

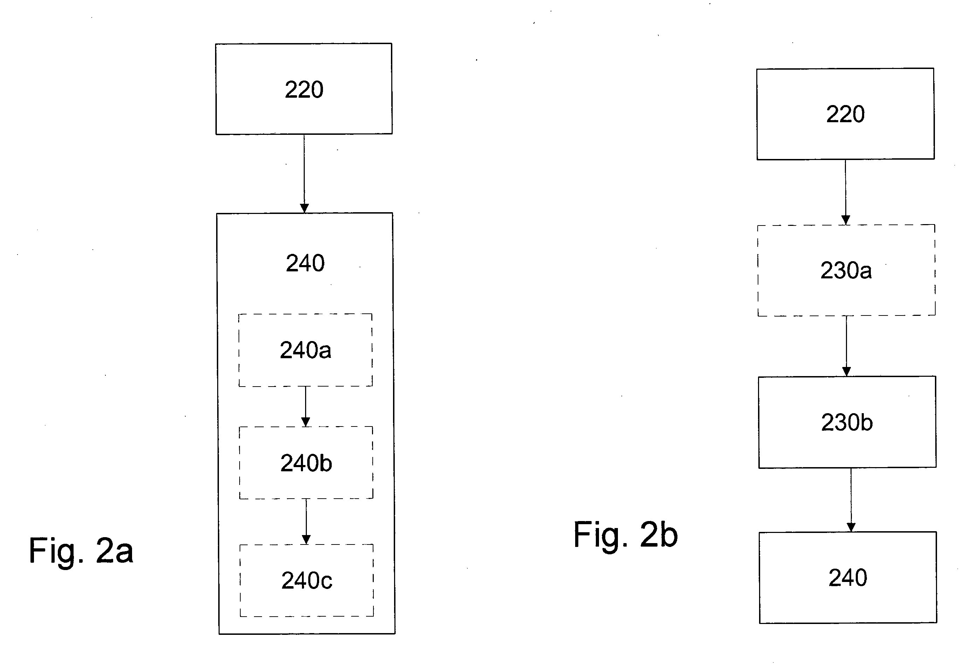

The functionality of the synchronization manager 170 is further described in the methods in connection with Figs. 2a and 2b.

*A context approach to mixing*

Fig. 2a shows a method for mixing of image frame sequences depicting a scene or an event, using a mobile video mixing system, the method comprising:

Step 220: receiving live video feeds from two or more local mobile units 110 or other video sources. According to embodiments, any suitable number of video sources may be used.

This step may according to an embodiment comprise receiving an image frame sequence from a first video source; and receiving an image frame sequence from a second video source.

Step 240: mixing the received video frame sequences.

According to embodiments, step 240 comprises, for each time instance, the following sub-steps:

Sub-step 240a: receiving or retrieving a parameter representing the context of the use of the mobile video mixing system.

According to an embodiment, the context parameter relates to whether the central user and/or the mixer node is "in view" or "out of view" of the depicted object, scene or event.

In an embodiment, the context parameter is generated in response to a selection of the following:

- receiving user input via one or more interaction devices or inputters integrated in, coupled to, or configured to transfer information to the mobile video mixing system;
- receiving positioning information from a positioning device integrated in;, coupled to or configured to transfer information to the mobile video mixing system; and/or
- receiving light or audio information relating to the context of the use of the mobile video mixing system from one or more sensor integrated in, coupled to, or configured to transfer information to the mobile video mixing system.

For example, if a user inputs information indicating that the video mixing is performed in view of the depicted scene, a context parameter is generated that represents the context "in view". On the other hand, if a user inputs information indicating that the video mixing is performed out of view of the depicted scene, a context parameter is generated that represents the context "out of view".

If a received or retrieved position information, captured or measured using a positioning device such as a position sensor, a GPS or the like, or a distance measuring device, indicates that the video mixing system is very near, "in view of" the depicted scene, a context parameter is generated that represents the context "in view". If the position information indicates that the video mixing system is not in the same location as the depicted scene and hence cannot be "in view" of it, a context parameter is generated that represents the context "out of view".

In the same way, if received or retrieved light and/or audio information, captured or measured using light and/or an audio sensors, indicates that the video mixing system is very near, "in view of" the depicted scene, a context parameter is generated that represents the context "in view". This may for example be the case if the light and/or audio conditions are the same when measured by sensors of the local units 110 and sensors of the mixer node 120. Otherwise, a context parameter is generated that represents the context "out of view".

Sub-step 240b: selecting a video mixing mode, from a selection of at least two different video mixing modes, dependent on the context parameter.

According to an embodiment, the sub-step 240b of selecting a video mixing mode comprises determining whether the mobile video mixing is performed in view or out of view of the depicted scene or event, dependent on the context parameter; and

- selecting a first video mixing mode if the mobile video mixing is performed in view of the depicted scene or event; or
- selecting a second video mixing mode if the mobile video mixing is performed out of view of the depicted scene or event.

According to embodiments, the different video mixing modes may involve the use of different synchronization techniques. According to embodiments, such synchronization techniques may involve buffering and/or frame rate control or frame rate dropping.

According to an embodiment, a first video mixing mode involves frame rate control.

According to an embodiment, a second video mixing mode involves buffering of video frames.

In an embodiment, it is determined that the mobile video mixing is performed in view of the depicted scene, whereby a mixing mode involving frame rate control is selected.

In an embodiment, it is determined that the mobile video mixing is performed out of view of the depicted scene, whereby a mixing mode involving buffering of video frames is selected.

Sub-step 240c: mixing the received video frame sequences according to the selected video mixing mode.

Fig. 2b shows a method similar to that of Fig. 2a, wherein steps 220 and 240 correspond to the steps 220 and 240 of Fig. 2a, and the method further comprises a selection of the following:

In an optional step 230a: ensuring that the received video feeds can be compared.

According to embodiments, step 230a comprises retrieving temporal variations from the respective video feeds and calculating synchronization offset based on the retrieved information, in manners per se known in the art. According to an embodiment, retrieving temporal variations may comprise extracting audio signatures from corresponding streams and calculate synchronization offset by comparing the similar feature occurrence in the audio of both streams. According to another embodiment, retrieving temporal variations may comprise extracting visual features from corresponding streams and calculate synchronization offset by comparing the similar feature occurrence in the image frame sequence of both streams.

According to another embodiment, step 230a comprises retrieving time stamps from the respective video feeds and calculating synchronization offset based on the retrieved time stamp information. If we choose to depend on timestamps generated by the internal camera clocks to calculate synchronization offset, it will be more efficient in terms of processing recourses. When we depend solely on timestamps generated by cameras for this purpose, the inaccuracies caused by clock drift and skew comes in the way. However, in most practice scenarios the mobile live video production time will not exceed several hours, therefore, the clock drift and skew does not have significant effect on the final synchronization calculation in this case. Thus we can safely choose timestamp based method for offset calculation. Furthermore, if higher precision in clock synchronization is required it is possible to use network time protocol (NTP) to keep the mobile devices clocks synchronized. This protocol offers precision of the order of 10 milliseconds.

The advantages of calculating synchronization offset using audio or visual features is that we do not have to care about the clock drift and skew as we are not depending on the time stamps in the stream. But on the other hand this approach requires more processing resources thus introducing extra processing delay at receiver end. Also this approach requires all the video sources, or cameras, to be present at the same location, which is not always the case in mobile collaboration.

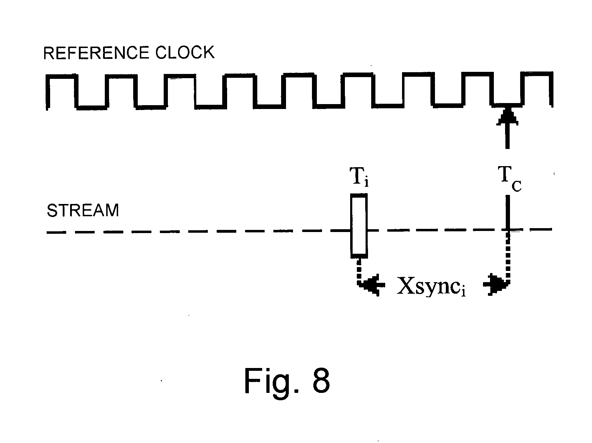

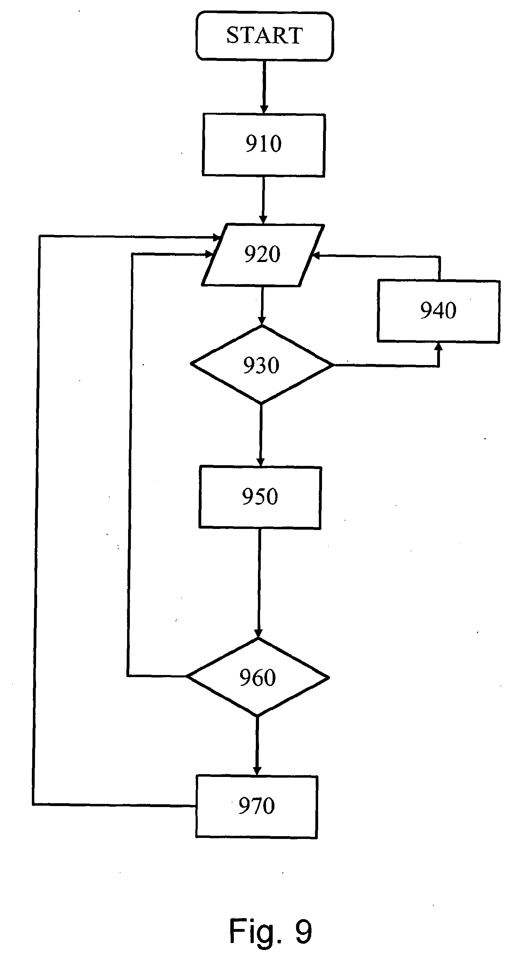

In an embodiment, step 230 comprises calculating and compensating for the synchronization offset between a reference clock and image frames received from the first video source and the second video source, respectively. This embodiment is described further in connection with Figs. 8 and 9.

Step 230b: align or synchronize the video feeds, i.e. equalizing the asynchronies with buffering and/or synchronization techniques.

According to embodiments, the different video mixing modes may involve the use of different synchronization techniques. According to embodiments, such synchronization techniques may involve buffering and/or frame rate control or frame rate dropping.

According to an embodiment, a first video mixing mode involves frame rate control. According to an embodiment, the first video mixing mode, involving frame rate control, is set when it has been determined that the mobile video mixing is performed in view of the depicted scene.

According to an embodiment, a second video mixing mode involves buffering of video frames. According to an embodiment, the second video mixing mode, involving buffering of video frames, is set when it has been determined that the mobile video mixing is performed out of view of the depicted scene.

Different alignment and synchronization techniques are discussed further below, with references to the requirement on delays.

Due to mobility and heterogeneity involved in mobile collaborative mixing systems it is not suitable to go with the solutions where some additional synchronization hardware is used. Therefore, embodiments of the invention relate to approaches that does not require any special changes at the local or mobile device ends.

*"In view" mixing and "out of view" mixing*

Mobile collaborative scenario the live video production has two major production settings: "in view" mixing and "out of view" mixing. Both of the settings have their own certain requirements regarding delays and synchronization. Therefore, the methods and systems presented herein are configured to enable a central user to select one of two modes for mixing, based on whether the mixing is performed "in view" or "out of view" of the depicted object, scene or event. According to an embodiment, not shown in the figures, receiving or retrieving a context parameter comprises receiving user input via one or more interaction devices, or inputters, integrated in, coupled to, or configured to transfer information to the mobile video mixing system.

According to an embodiment, receiving or retrieving a context parameter comprises receiving positioning information from a positioning device integrated in; coupled to or configured to transfer information to the mobile video mixing system.

According to an embodiment, receiving or retrieving a context parameter comprises receiving light or audio information relating to the context of the use of the mobile video mixing system from one or more sensor integrated in, coupled to, or configured to transfer information to and/or from the mobile video mixing system.

According to an embodiment, the receiving or retrieving a context parameter comprises a selection of any or all of the alternatives presented above.

According to embodiments, the context referred to as "in view" means that the central user, for instance the director, is present at the site of the scene or event that is being depicted and that the director therefore directly can see and observe the depicted scene or event. As the director can see the actual scene or event in front of them, delays in the mixer node will be highly noticeable. On the other hand, synchronization leading to lack of smoothness in the received live video feeds or streams may be complemented by the director's ability to see the scene or event directly. Therefore, some lack of smoothness can be acceptable in this case, but not delays. In "in view" mixing scenario, delay is quite intolerable as it may confuse the director and effect his/her production decisions.

As frame rate dropping techniques, further described below, ensures short delay in streams at the mixer node, such techniques are suitable for scenarios where the director is mixing and producing live videos while looking directly at the event, i.e. "in view" of the depicted object, scene or event.

According to embodiments, the context referred to as "out of view" means that a director is producing and/or mixing received live streams at a location remote from the actual scene or event that is being filmed. Therefore, the director can only see the event through the camera feeds that are presented or displayed at the mixer node. In this context, the director will not notice delays compared to the depicted scene or event since there no direct comparison can be performed. On the other hand, synchronization among received video feeds or streams and smoothness of video presentation is of high importance because it affects the *multi-viewing,* and thus affects the director's mixing decisions.

For "out of view" mixing, pre-buffer techniques, further described below, are more applicable. Such techniques can be useful for improving the synchronization among video streams with smooth presentation. However, due to extensive buffering it may also cause increased delays. In the case of "out of view" mixing, the delay to the mixer console does not matter and can be tolerated.

In close analysis of video streaming delays, jitter and synchronization the inventors have identified an interesting relationship among the three. When covering up video jitter effect, for example by the use of buffering the delay adds up. Similarly, when trying to synchronize camera feeds having different delay, and sometimes visible jitter, the delay adds up further because when the video feeds are synchronized, buffering is used once again.

Ideally speaking the camera feeds presented to the mixer console should have negligible delay, high synchronization and high smoothness when they are played back. However, in reality there is always a trade-off between these parameters.

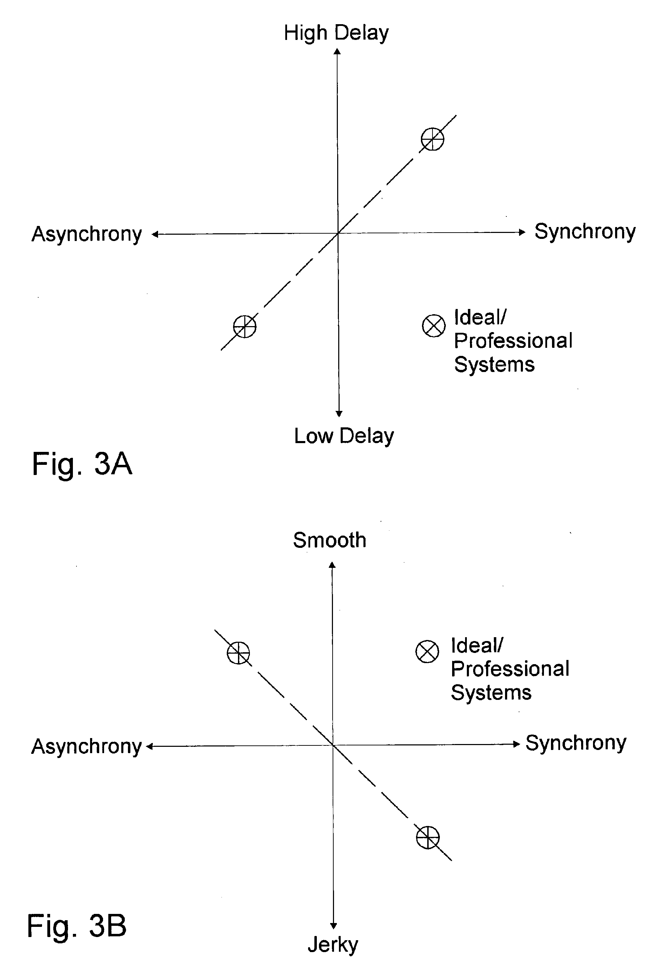

According to the pre-mixer buffering technique described below, the focus is to achieve synchronization while keeping the video playback smooth. Using the described buffering techniques, a higher or better synchronization, for example achieved using buffers, will in turn generate an increase in delay, as illustrated in Fig. 3a. Ideal or professional systems have higher synchronization and lower delay, as indicated by the cross marker in the fourth quadrant in figure 3a. Buffering techniques are suitable for "out of view" mixing where synchronization and smoothness are more important than delay minimization.

In the case of frame rate dropping techniques, a low delay is maintained and synchronization is achieved by dropping early frames at the cost of smoothness. The dotted line in figure 3b illustrates this relation.

In an ideal case the system should have highly smooth video playback with high synchrony, as indicated in the second quadrant of the graph shown in figure 3b. Frame rate dropping techniques are suitable for an "in view" mixing scenario as it ensures low delay through good synchronization, while a possible lack of smoothness in the received video feeds can be tolerated.

As discussed above, there are two significant settings in which a video director can mix live feeds using live collaborative mobile video mixing systems; "in view" mixing and "out of view" mixing.

According to embodiments of the invention there is provided a switching functionality that enables the system to change its synchronization technique according to context. If for example the system in being used in "out of view" mixing, it uses a synchronization technique appropriate for the "out of view" context. This may for instance be some kind of buffering technique. However, if the director happens to move to a position that is in view of the scene or event being depicted, the context would change. According to this embodiment, the system would switch to a synchronization technique that is suitable for "in view" mixing, for example using a frame rate control technique.

As described herein, there are several possibilities for triggering the switching. A switch can be based on a user's decision and triggered by a user interacting with an interaction device integrated in or coupled to the mobile video mixing system, position based using GPS, light sensor based, for example using light detection to distinguish between indoor and outdoor context, audio based, or comprising a combination of any or all of the above examples, in order to provide the system with the information for switching the synchronization mode.

In the following section, different synchronization techniques that maybe used according to different embodiments are described in further detail.

*Synchronization*

The causes for asynchrony to appear in a networked environment are traditionally seen as due to:

- Network Delays: Delays experienced by media data units (MDUs) in the network to reach its receiver, which varies according to network load.

- Network Jitter: Variation in network delay caused by the variation in network load and other network properties.

- Receiver system delay: Delay caused by the processing time taken at the receiving system. It is the time duration between reception and presentation of stream data.

- Receiver system jitter: Variation in the receiver system delay caused by varying system load and processing delays.

- Clock Skew: Difference in the clocks of the sender and the receiver.

- Clock Drift: Variation in Clock skew caused by variation in temperature and other imperfections in the clock.

There are several approaches for achieving synchronization, for example the temporal alignment and synchronization techniques described below.

In live video mixing, it is very important that the director receives all streams of an event at the same time to be able to select between different video feeds and different camera angles for transmission. According to embodiments, synchronization issues are handled by buffering and/or frame dropping, after calculating the synchronization offset. On the other hand, the stream quality is also of importance, since the producer also needs to be able to see what is going on in the depicted scene or event by looking at the live feed displayed, for example displayed on the local output 150 of a mixer node 120. The following two buffering schemes/techniques balance these requirements differently.

*Pre mixer buffering technique*

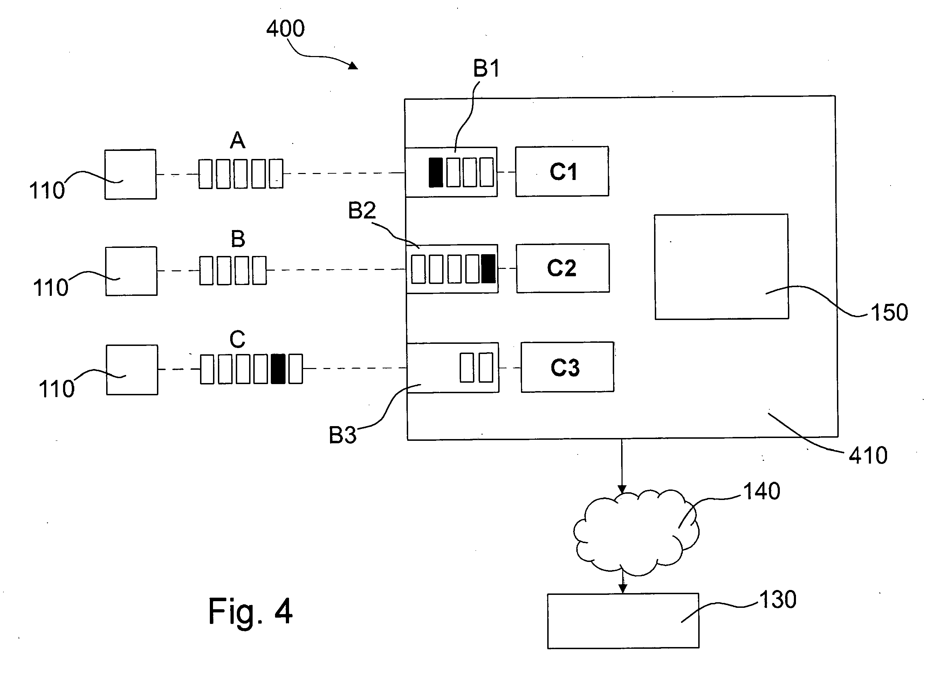

Fig. 4 shows a system 400, similar to the system 100 of Fig. 1, wherein three local units 110, for example mobile cameras, streaming live video feeds to an instant broadcasting system (IBS) mixer node 410 (IBS node or IBS console). A, B and C represent live images frame sequences or video streams captured by and transmitted from the respective local units to the IBS mixer node 410, via buffers B1, B2 and B3, respectively. As illustrated by the vertical blocks along the streams, that represent individual video frames, stream C is the most delayed stream and B is the least delayed stream. The black frame represents a certain event captured at the same time by all local units 110. The position of the black frame in each stream shows that each stream is experiencing different delay, meaning that they are out of synchronization.

According to an embodiment, the least delayed stream (B) is buffered in buffer B2 before presentation until the buffer B3 of the most delayed stream (C) starts filling up. In other words, the method comprises for example buffering stream B until buffers for stream A and stream C also receive the black frame so that it can be presented at the same time on a display device of the local output device 150. In this way the asynchrony among the live streams can be equalized before presentation in the IBS mixer node 410.

According to an embodiment, the method described in connection with Fig. 4 is used for "out of view" mixing, since it renders good synchronization, but possibly introducing additional delay.

*Frame rate control technique*

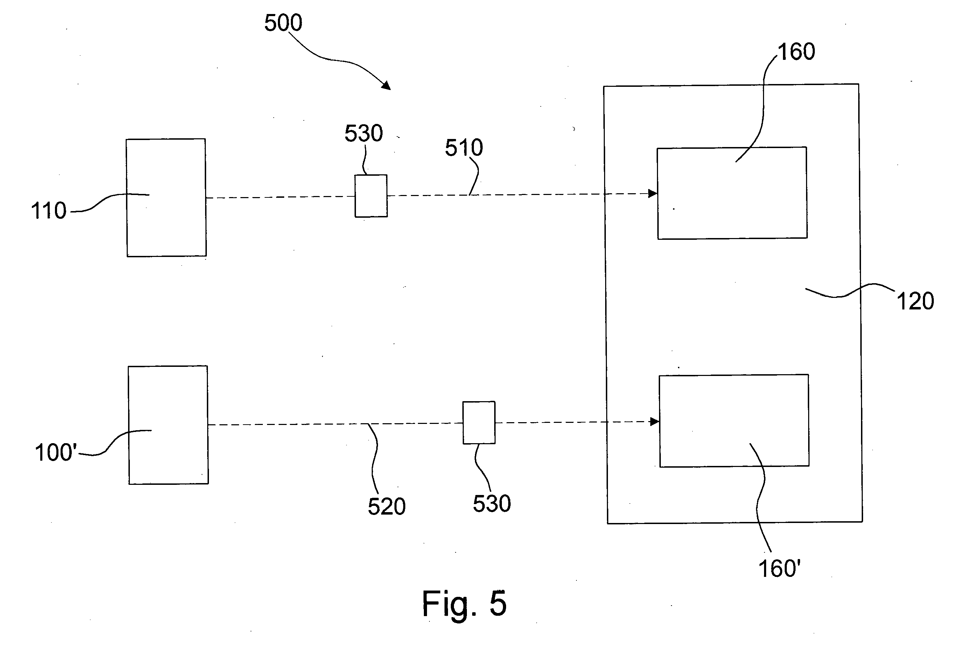

As previously mentioned, "in view mixing" is highly sensitive to delays. Therefore the synchronization solution with buffering, described above, it not suitable for this mixing context. Fig. 5 shows a method more suited for "in view" mixing.

In Fig. 5, a mixing system 500 is shown, wherein two local units 110 and 110', or video sources 110 and 110', for example represented as mobile camera sources, each captures a live video feed of a scene or event and transmits the feed to a respective receiver 160 and 160' in a mixer node or mixer console 120. The video feed of local unit 110 is transferred via a link or video stream 510 and the video feed of local unit 110' is transferred via a link or video stream 520. The vertical bars 530 in the video streams 510, 520 represent frames that are captured at the same time instance, indicating that the video stream 510 is transferred at a lower rate than the video stream 520. This difference in speed or transfer rate will cause video stream 510 to be delayed, thus resulting in asynchrony when arriving at, and possibly being presented on a display of, the mixer node or mixer console 120. For "in view" mixing, a solution is required that will enable speeding up the video frame transfer despite of lower link speed so that both streams can be synchronized at the receiver end, i.e. in the mixer node or mixer console 120.

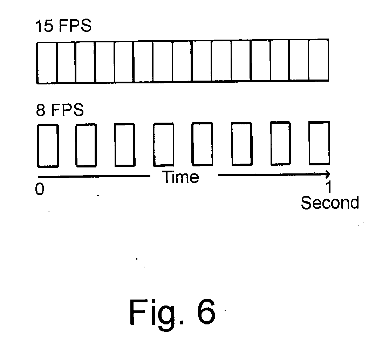

When video is transferred or streamed from one device to another, it is performed at a certain frame rate, for example a certain number of frames per second (fps). Usually frame rate is negotiated in the start of a streaming session and remains the same during the rest of the streaming session. Let's suppose the negotiated frame rate between video source and receiver is 15 fps, as illustrated in the example in Fig. 6. This means that 15 image frames will be used to depict the scene or event each second. At a static frame rate of 15 fps, the same amount of data is required for transmission over both the slow and the fast link for each time unit, for example each second, meaning that a video feed streamed over a slower link will be delayed compared to a video feed streamed over a faster link, for example the links 510 and 520 of Fig. 5. However, by using a reduced frame rate, say for instance 8 frames per second as illustrated in the example of Fig. 6, the same duration of time (i.e. a second) in the image sequence will be covered with 8 frames. Hence less data is transferred over the link while covering the same amount of time, thus speeding up the experienced video transmission time.

As is readily apparent to a person skilled in the art, the frame rates of 15 fps and 8 fps mentioned in connection with Figs. 5 and 6 are merely used for illustrational purposes, and embodiments of the invention may be applied to any suitable frame rates.

It should further be noted that when video feeds are streamed from mobile phones using for example 3G or 4G connections, the available bandwidth is not guaranteed. Therefore, fluctuations in available bandwidth and data speed may be experienced. For example, if video feeds of the same scene or event is captured using two or more local units, individual streams from the local units to a central device may experience different delay over network due to variation in available network bandwidth.

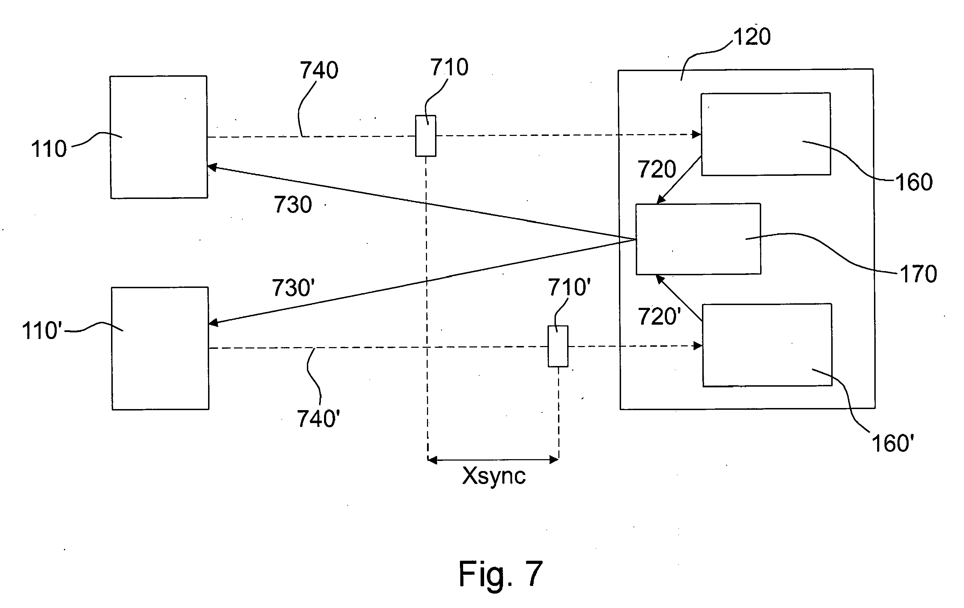

Fig. 7 shows a frame rate control technique for synchronization according to embodiments. In Fig. 7, two local units 110 and 110', for example in the form of mobile video cameras, capture video frame sequences and transfer said video frame sequences as live video feeds 740, 740' to receiving units 160 and 160', respectively, wherein the receiving units 160, 160' are comprised in a mixer node 120 or mixer console 120. The vertical bars 710, 710' in the transferred streams represents video frames that are captured at the same time instance.

As can be readily understood by a person skilled in the art, the number of local units or video sources may be any suitable number depending on circumstances and method and system embodiments described herein are highly scalable and adaptable to a larger number of local units or video sources. In Figs. 1, 4, 5, 6 and 7, the number of local units or video sources is limited to two or three for illustrational purposes and ease of understanding.

According to an embodiment, the internal clocks of two local units are synchronized, using for example network time protocol (NTP), and each video frame in the video stream is time stamped. According to an embodiment, $T_i$ is the time when receiving unit 160 receives a given frame i from the local unit 110 and $T_j$ is the time when receiving unit 160' receives the corresponding frame j from the local unit 110'. When video frames arrive at their corresponding receivers, a control signal 720, 720' is sent to a synchronization manager 170 comprised in the central device 120. The synchronization manager 170 interprets the respective control signals 720, 720' to retrieve $T_i$ and $T_j$ and calculates the synchronization offset, as Xsync as $T_i - T_j$ = Xsync. Dependent on the determined value for Xsync, the synchronization manager 170 determines which video feed stream 740, 740' is lagging behind. According to an embodiment, the synchronization manager 170 then sends a control signal 730, 730' to the local unit that is identified as the sender of slower stream to drop the frame rate. According to embodiments, the control signal may indicate that the frame rate should be dropped by a certain predetermined value, or by a value dependent on the determined value of Xsync. In the embodiment illustrated in Fig. 7, the video feed 740 streamed from local unit 110 is lagging behind, whereby the synchronization manager 170 controls the local unit 110, through the control signal 730, to drop the frame rate of the video feed or stream 740. By dropping the frame rate of the stream 740, synchronization between the streams 740 and 740' is enabled. However, due to lower frame rate the video will not be as smooth.

According to an embodiment, the synchronization manager 170 continuously receives bandwidth information from the slower stream's sender, in this case local unit 110, and as the available bandwidth increases, the frame rate is controlled by the synchronization manager 170 to approach the normal level while the synchronization manager 170 monitors the synchronization condition.

In an embodiment, synchronization between received video feeds, or streams, is performed by the synchronization manager 170, using a value received or retrieved from a reference clock. The reference clock may be an internal clock of the receiving mixer node or mixer console 120, meaning that it will be common for all receivers 160 of the mixer node or mixer console 120. Thereby, the video feeds, or streams, received from the senders may be synchronized with regard to the same reference clock, whereby synchronization of any number of received streams from any number of local units is enabled. In other words, this embodiment enables extension of the proposed methods to any number of streams or video feeds. In an embodiment, the reference clock generates time stamps $T_c$ with a frequency equal to the maximum supported frame rate, for example 25 or 30 frames per second. In order to keep all the received streams synchronized, the synchronization manager 170 compares time stamps in each individual received stream to the reference clock and compensates for synchronization offset, to keep each stream synchronized with the reference clock, as further described below in connection with Figs. 8 and 9.

Fig. 8 shows a method for calculation of synchronization offset, according to an embodiment, using a reference clock. In Fig. 8, $T_i$ represents a timestamp of a frame in stream i, sent from a local unit 110 and received in a receiver 160 of the mixer node or mixer console 120.

According to an embodiment, the receivers 160 are configured to receive video feed frames from the respective senders or local units 110 and transmit the time stamp $T_i$ of each frame i to the synchronization manager 170. The synchronization manager 170 in turn is configured to receive or retrieve the current value $T_c$ of the reference clock, read or interpret the value of the received time stamp $T_i$ and calculate a synchronization offset $Xsync_i$ representing the difference between $T_c$ and $T_i$, as illustrated in Fig. 8.

In an embodiment, the synchronization offset $Xsync_i$ for the current frame *i* of the stream is calculated according to the following equation:

$$Xsync_i = |T_c - T_i| \qquad (Eq.\ 1)$$

In multimedia systems, synchronization requirements among streams can for example range from quite low, for example somewhere between 100 milliseconds and approximately 300 milliseconds, or considerably lower or higher depending on circumstances. Below, the highest allowed synchronization offset according to certain preset requirements is referred to as the synchronization threshold value Thresh. The offset may be measured in milliseconds or any other suitable time unit.

If the synchronization offset value $Xsync_i$ for the current frame *i* of a video feed stream is higher than the synchronization threshold value Thresh, the synchronization manager 170 sends a control signal to the sender of stream, in this case a local unit 110, to drop the frame rate by a predefined step value. This comparison is performed iteratively for each received frame and the synchronization manager 170 will for each frame keep sending a control signal to the local unit 110 to drop the frame until $Xsync_i$ becomes less than the synchronization threshold Thresh. Thereby, the stream will become synchronized according to the principle that is shown in Figs. 6 and 9, further described below. However, due to lower frame rate the received video feed will not be as smooth.

According to an embodiment, the synchronization manager 170 is configured to continuously receive network condition information from each local unit 110. The synchronization manager 170 may be configured to monitor the network condition, representing the available bandwidth and/or the synchronization condition, continuously for each stream received from a respective local unit 110 of the system 100.

In an embodiment, the synchronization manager 170 is configured to send an indication, for example in the form of a control signal, to a local unit 110 to decrease, or drop, its frame rate in response to a detected decrease in available bandwidth obtained by the continuous network condition monitoring.

The synchronization manager 170 may further be configured to send an indication, for example in the form of a control signal, to a local unit 110 that has previously lowered or dropped its frame rate to increase the frame rate, in response to the synchronization manager 170 receiving network condition information that indicates that there is an increase in available bandwidth. The synchronization manager 170 may, based on information obtained by the continuous monitoring of the network condition indicating an increase in available bandwidth, keep sending indications to the local unit 110 to increase its frame rate until the normal frame rate, or a predetermined frame rate level, has been reached.

In an embodiment wherein multiple video feeds, or streams, are received in the mixer node or mixer console 120, every stream is independently handled and its frame rate is adjusted dynamically to keep it synchronized with the reference clock. This leads to the beneficial effect that when all the streams are synchronized with regard to one reference clock, the streams are automatically synchronized with each other. Therefore, no computationally expensive and comparison between individual streams for synchronization purposes is necessary, and no additional delay is introduced in the system due to such comparisons.

Fig. 9 shows a flow diagram of a frame rate control method, for controlling the frame rate of a stream received from a local mobile device 110, according to embodiments described herein. As can be seen from Fig. 9, the frame rate control method is performed iteratively according to the following steps:

Step 910: Initialize the reference clock and the synchronization threshold Thresh.

According to an embodiment, initializing the reference clock comprises ensuring that the reference clock is synchronized with other devices, such as the local units 110, using for example NTP, as described herein.

In an embodiment, the reference clock is an internal clock of the receiving mixer node or mixer console 120.

According to an embodiment, the synchronization manager 170 is configured to receive or retrieve a value, or a signal indicative of the value, of the synchronization threshold Thresh, and further initialize the synchronization threshold Thresh according to the received or retrieved value. The value may be predetermined and stored for retrieval in a memory accessible to the synchronization manager 170, or a signal indicative of the value may be generated in response to a user providing input via one or more interaction devices, or inputters, integrated in, coupled to, or configured to transfer information to the synchronization manager 170.

Step 920: Retrieve $T_i$ and network condition information.

In other words, Step 920 comprises retrieving $T_i$, representing the timestamp value of the current frame i in the stream received from the local mobile device 110, and further retrieve the current network condition.

According to embodiments, the network condition information relates to the currently available network bandwidth.

In an embodiment, a receiver 160 is configured to receive a stream from a local unit 110, and the synchronization manager 170 is configured to receive or retrieve $T_i$ from the receiver 160, or receive the current frame i from a receiver 160 and determine $T_i$ from the received video frame i.

According to an embodiment, the synchronization manager 170 is configured to continuously receive network condition information from the local unit 110. The synchronization manager 170 may be configured to monitor the network condition, representing the available bandwidth and/or the synchronization condition, continuously for the stream i received from the local unit 110.

According to an embodiment, the method continues to Step 930 after Step 920 has been performed. In an embodiment, the method continues from Step 920 to Step 930 when a deviation in the network condition, or available bandwidth, occurs.

According to embodiments, the network is continuously monitored until a deviation is detected.

Step 930: Determine whether the network is recovering or not.

In step 930, the network condition information, or currently available network bandwidth, received or retrieved in step 920 is compared to previously received, retrieved or stored network condition information, or available bandwidth. If it is determined from the comparison that the network is recovering, the method continues in Step 940. If it is determined from the comparison that the network is not recovering, the method continues in Step 950.

In an embodiment, if the comparison shows that the available bandwidth has increased and/or is now at or above a preset acceptable level, it is determined that the network is recovering and the method continues in Step 940. If the comparison shows that the available bandwidth has not increased, it is determined that the network is not recovering and the method continues in Step 950.

According to an embodiment, the synchronization manager 170 is configured to receive or retrieve the network condition information; compare the received or retrieved information to previously received or retrieved network information, or to a preset acceptable level stored in a memory accessible to the synchronization manager 170; and further to determine, based on the comparison, whether the network is recovering or not.

In the case where the network condition information indicates that the network condition is good, the synchronization manager may be configured to keep monitoring the network condition until a deviation is detected. In other words, if the received frame rate is normal, or at a predetermined acceptable level, and no decrease in available bandwidth is detected during the network condition monitoring, the method may proceed directly from Step 920 to Step 950, without performing the recovery determination of Step 930. When such a deviation occurs, the method continues in Step 930.

Step 940: Recover the frame rate.

If the comparison of Step 930 shows that the network is recovering, the synchronization manager 170 is in an embodiment configured to recover the frame rate, or in other words set the frame rate to normal.

According to an embodiment, the synchronization manager 170 is configured to send an indication, for example in the form of a control signal, to a local unit 110 that has previously lowered or dropped its frame rate to increase the frame rate, in response to the synchronization manager 170 receiving network condition information that indicates that there is an increase in available bandwidth.

After the frame rate has been reset, the method starts over from Step 920.

Step 950: Determine the synchronization offset $Xsync_i$.

According to an embodiment, the synchronization offset $Xsync_i$ is determined for each frame i. In another embodiment, the synchronization offset $Xsync_i$ is determined for every number of frames, for example every 5 received frames, 10 received frames, or at any other suitable interval. According to this embodiment, the synchronization offset $Xsync_i$ may for example be determined as the mean, average, mode or median $Xsync_i$ value for the specified number of frames.

The synchronization offset $Xsync_i$ may be determined as the difference between a current value $T_c$ of the reference clock and the value $T_i$, wherein $T_i$ represents for example the value of the timestamp for a current frame *i*, if $Xsync_i$ is determined for each received frame, or the mean, average, median or mode value of the timestamp values of all the frames for which an $Xsync_i$ value has been determined.

In an embodiment, $Xsync_i$ is calculated according to equation 1 above.

According to an embodiment, the synchronization manager 170 is configured to retrieve the value $T_c$, retrieve the value $T_i$; determine the difference between $T_c$ and $T_i$; and set the synchronization offset $Xsync_i$ to the determined difference value.

Step 960: Compare the value of the synchronization offset $Xsync_i$ to the value of the synchronization threshold Thresh.

According to an embodiment, the synchronization manager 170 is configured to compare $Xsync_i$ to Thresh and determine whether the following condition is true:

$$Xsync_i \geq Thresh \hspace{4cm} (Eq.\ 2)$$

If $Xsync_i \geq Thresh$, the method continues in Step 970. If $Xsync_i < Thresh$, the method starts over from Step 920.

Step 970: Drop the frame rate.

If it is determined in Step 960 that $Xsync_i \geq Thresh$, the frame rate is dropped at the sender.

According to an embodiment, the synchronization manager 170 is configured to generate an indication, for example in the form of a control signal, in response to the determination in Step 960 that $Xsync_i \geq Thresh$. In an embodiment, the synchronization manager 170 is configured to send the indication or control signal to the local unit 110, thereby controlling the local unit 110 to decrease, or drop, its frame rate, or in other words to capture and/or transmit fewer frames per second.

After the frame rate has been dropped, the method starts over from Step 920.

Through the method described in connection with Fig. 9, an iterative frame rate control, iterating Steps 920 to 970, is achieved.

Furthermore, the synchronization manager 170 may thereby, based on information indicating an increase in available bandwidth obtained by the continuous monitoring of the network condition, keep sending indications to a local unit 110 that has previously decreased or dropped its frame rate to increase its frame rate again until the normal frame rate, or a predetermined frame rate level, has been reached.

According to embodiments, there is provided a non-transitory computer readable memory comprising computer program code that, when executed in a processor, is configured to perform any or all of the method steps described herein.

**Claims**

1. A method for mixing of live video signals of image frame sequences depicting a scene or an event and handling of dynamic delay during said mixing, using a mobile video mixing system (100), the method comprising:

   - receiving an image frame sequence from a first video source (110);
   - receiving an image frame sequence from a second video source (110);
   - mixing the received video frame sequences;

   **characterized in that** the mixing further comprises:

   - at each time instance:

      i. receiving or retrieving (240a) a parameter representing the context of the use of the mobile video mixing system;
      ii. determining whether the mobile mixing is performed in view of or out of view of the depicted scene or event, on the basis of the context parameter,
      iii. selecting (240b), dependent on said determination, a video mixing mode, from a selection of at least two different video mixing modes, wherein each different video mixing mode involves using a different synchronization technique, selecting a first video mixing mode involving frame rate control if it is determined that the mobile video mixing is performed in view of the depicted scene or event; or selecting a second video mixing mode involving buffering of video frames if it is determined that the mobile video mixing is performed out of view of the depicted scene or event, and;
      iv. mixing (240c) the received video frame sequences according to the selected video mixing mode.

2. The method of any of the preceding claims, wherein the context parameter is generated in response to a selection of the following:

   - receiving user input via one or more inputters integrated in, coupled to, or configured to transfer information to the mobile video mixing system (100);
   - receiving positioning information from a positioning device integrated in, coupled to or configured to transfer information to the mobile video mixing system (100); and/or
   - receiving light or audio information relating to the context of the use of the mobile video mixing system from one or more sensors integrated in, coupled to, or configured to transfer information to the mobile video mixing system (100).

3. The method of any of the claims 1-2, further comprising calculating and compensating for the synchronization offset between a reference clock and image frames received from the first video source and the second video source, respectively.

4. The method of any of the claims 1-2, further comprising calculating and compensating (230) for the synchronization offset between two corresponding image frames received from the first video source and the second video source, respectively.

5. A mobile video mixing system for mixing of live video signals of image frame sequences depicting a scene or an event and handling of dynamic delay during such mixing, the system comprising:

- a first video source (110) configured to capture a first image frame sequence;
- a second video (110) source configured to capture a second image frame sequence;
- a mixer node (120) comprising a first receiver (160) and a second receiver (160) configured to receiving image frames from said first video source and said second video source, respectively, wherein the mixer node is configured to enable a central user to perform video mixing in real time using one or more inputters integrated in, coupled to, or configured to transfer information to the video mixing system;

**characterized in that**:

- a synchronization manager is configured to synchronize the received image frame sequences before mixing;
- the mixer node is further configured to, for each time instance:

i. receive or retrieve (240a) a parameter representing the context of the use of the mobile video mixing system;
ii. determine whether the mobile mixing is performed in view of or out of view of the depicted scene or event, on the basis of the context parameter,
iii. select (240b), dependent on said determination, a video mixing mode, from a selection of at least two different video mixing modes, wherein each different video mixing mode involves using a different synchronization technique selecting a first video mixing mode involving frame rate control if it is determined that the mobile video mixing is performed in view of the depicted scene or event; or selecting a second video mixing mode involving buffering of video frames if it is determined that the mobile video mixing is performed out of view of the depicted scene or event, and;
iv. and mix (240c) the received image frames sequences according to the selected video mixing mode.

6. The system of claim 5, wherein the video mixing system is configured to generate the context parameter by:

- receiving user input via one or more inputters integrated in, coupled to, or configured to transfer information to the mobile video mixing system;
- receiving positioning information from a positioning device integrated in, coupled to or configured to transfer information to the mobile video mixing system; and/or
- receiving light or audio information relating to the context of the use of the mobile video mixing system from one or more sensors integrated in, coupled to, or configured to transfer information to the mobile video mixing system; and

generating the context parameter based on the received user input, positioning information, light information and/or audio information.

7. The system of any of the claims 5-6, wherein the synchronization manager is configured to calculate and compensate for the synchronization offset($xsync_1$) between a reference clock and image frames received from the first video source and the second video source, respectively (Fig. 8).

8. The system of any of the claims 5-7, wherein the synchronization manager is configured to calculate and compensate for the synchronization offset between two corresponding image frames received from the first video source and the second video source, respectively.

9. The system of any of the claims 5-8, wherein the first video source and the second video source are mobile phone cameras.

10. The system of any of the claims 5-9, wherein the mixer node is further configured to control display of the final mixed video output, by transferred the video output through broadcast or streaming over a communications network to a remote output.

**11.** A non-transitory computer readable memory comprising computer program code that, when executed in a processor, is configured to perform any or all of the method steps of claims 1-4.

**Patentansprüche**

**1.** Verfahren zum Mischen von Echtzeit-Videosignalen von Bildrahmenfolgen, die eine Szene oder ein Ereignis darstellen, und zum Handhaben von dynamischen Delay während des Mischens, unter Verwendung eines mobilen Videomischsystems (100), wobei das Verfahren umfasst:

Empfangen einer Bildrahmenfolge von einer ersten Videoquelle (110);
Empfangen einer Bildrahmenfolge von einer zweiten Videoquelle (110);
Mischen der empfangenen Bildrahmenfolgen;

**dadurch gekennzeichnet, dass** das Mischen weiterhin umfasst:

bei jedem Zeitpunkt:

i. Empfangen oder Abfragen (240a) eines Parameters, der den Kontext der Verwendung des mobilen Videomischsystems repräsentiert;
ii. Bestimmen, ob das mobile Mischen in Sicht oder außer Sicht der dargestellten Szene oder des dargestellten Ereignisses durchgeführt wird, auf Basis des Kontextparameters,
iii. Auswählen (240b) eines Videomischmodus von einer Auswahl von mindestens zwei unterschiedlichen Videomischmodi in Abhängigkeit von der Bestimmung, wobei jeder unterschiedliche Videomischmodus das Verwenden einer unterschiedlichen Synchronisationstechnik einschließt, das Auswählen eines ersten Videomischmodus einschließt, der eine Rahmenratensteuerung einschließt, falls bestimmt wird, dass das mobile Videomischen in Sicht der dargestellten Szene oder des dargestellten Ereignisses durchgeführt wird; oder das Auswählen eines zweiten Videomischmodus einschließt, der eine Pufferung von Videorahmen einschließt, falls bestimmt wird, dass das mobile Videomischen außer Sicht der dargestellten Szene oder des dargestellten Ereignisses durchgeführt wird, und;
iv. Mischen (240c) der empfangenen Bildrahmenfolgen gemäß dem ausgewählten Videomischmodus.

**2.** Verfahren gemäß einem der vorstehenden Ansprüche, wobei der Kontextparameter als Reaktion auf eine Auswahl des Folgenden erzeugt wird:

- Empfangen einer Benutzereingabe über eine oder mehrere Eingabestellen, die in das mobilen Videomischsystem (100) integriert sind, mit dem mobilen Videomischsystem (100) gekoppelt sind oder angepasst sind, um Informationen zu dem mobilen Videomischsystem (100) zu übertragen;
- Empfangen von Positionierungsinformationen von einer Positionierungsvorrichtung, die in das mobilen Videomischsystem (100) integriert ist, mit dem mobilen Videomischsystem (100) gekoppelt ist oder angepasst ist, um Informationen zu dem mobilen Videomischsystem (100) zu übertragen; und/oder
- Empfangen von Licht- oder Audioinformationen, die mit dem Kontext der Verwendung des mobilen Videomischsystems (100) in Zusammenhang stehen, von einem oder mehreren Sensoren, die in das mobile Videomischsystem (100) integriert sind, mit dem mobilen Videomischsystem (100) gekoppelt sind oder angepasst sind, um Informationen zu dem mobilen Videomischsystem (100) zu übertragen.

**3.** Verfahren gemäß einem der Ansprüche 1-2, weiterhin umfassend :

Berechnen und Kompensieren des Synchronisationsoffsets zwischen einem Referenztakt und Bildrahmen, die von der ersten Videoquelle bzw. der zweiten Videoquelle empfangen wurden.

**4.** Verfahren gemäß einem der Ansprüche 1-2, weiterhin umfassend:

Berechnen und Kompensieren (230) des Synchronisationsoffsets zwischen zwei entsprechenden Bildrahmen, die von der ersten Videoquelle bzw. der zweiten Videoquelle empfangen wurden.

**5.** Mobiles Videomischsystem zum Mischen von Echtzeit-Videosignalen von Bildrahmenfolgen, die eine Szene oder ein Ereignis darstellen, und zum Handhaben von dynamischem Delay während solchen Mischens, wobei das System umfasst:

- eine erste Videoquelle (110), die angepasst ist, um eine erste Bildrahmenfolge aufzunehmen;
- eine zweite Videoquelle (110), die angepasst ist, um eine zweite Bildrahmenfolge aufzunehmen;
- einen Mischknoten (120), umfassend einen ersten Empfänger (160) und einen zweiten Empfänger (160), die angepasst sind, um Bildrahmen von der ersten Videoquelle bzw. der zweiten Videoquelle zu empfangen, wobei der Mischknoten angepasst ist, um einem Hauptbenutzer zu ermöglichen ein Videomischen in Echtzeit durchzuführen unter Verwendung einer oder mehrerer Eingabestellen, die in das mobilen Videomischsystem integriert sind, mit dem mobilen Videomischsystem gekoppelt sind oder angepasst sind, um Informationen zu dem mobilen Videomischsystem zu übertragen;
**dadurch gekennzeichnet, dass**
- eine Synchronisationsverwaltung angepasst ist, um die empfangenen Bildrahmenfolgen vor dem Mischen zu synchronisieren;
- zu jedem Zeitpunkt, der Mischknoten weiterhin angepasst ist zum:

i. Empfangen oder Abfragen (240a) eines Parameters, der den Kontext der Verwendung des mobilen Videomischsystems repräsentiert;
ii. Bestimmen, ob das mobile Mischen in Sicht oder außer Sicht der dargestellten Szene oder des dargestellten Ereignisses durchgeführt wird, auf Basis des Kontextparameters,
iii. Auswählen (240b) eines Videomischmodus von einer Auswahl von mindestens zwei unterschiedlichen Videomischmodi in Abhängigkeit von der Bestimmung, wobei jeder unterschiedliche Videomischmodus das Verwenden einer unterschiedlichen Synchronisationstechnik einschließt, das Auswählen eines ersten Videomischmodus einschließt, der eine Rahmenratensteuerung einschließt, falls bestimmt wird, dass das mobile Videomischen in Sicht der dargestellten Szene oder des dargestellten Ereignisses durchgeführt wird; oder das Auswählen eines zweiten Videomischmodus einschließt, der eine Pufferung von Videorahmen einschließt, falls bestimmt wird, dass das mobile Videomischen außer Sicht der dargestellten Szene oder des dargestellten Ereignisses durchgeführt wird, und;
iv. Mischen (240c) der empfangenen Bildrahmenfolgen gemäß dem ausgewählten Videomischmodus.

6. System gemäß Anspruch 5, wobei das Videomischsystem angepasst ist, um den Kontextparameter zu erzeugen durch:

- Empfangen einer Benutzereingabe über eine oder mehrere Eingabestellen, die in das mobilen Videomischsystem integriert sind, mit dem mobilen Videomischsystem gekoppelt sind oder angepasst sind, um Informationen zu dem mobilen Videomischsystem zu übertragen;
- Empfangen von Positionierungsinformationen von einer Positionierungsvorrichtung, die in das mobilen Videomischsystem integriert ist, mit dem mobilen Videomischsystem gekoppelt ist oder angepasst ist, um Informationen zu dem mobilen Videomischsystem zu übertragen; und/oder
- Empfangen von Licht- oder Audioinformationen, die mit dem Kontext der Verwendung des mobilen Videomischsystems in Zusammenhang stehen, von einem oder mehreren Sensoren, die in das mobilen Videomischsystem integriert sind, mit dem mobilen Videomischsystem gekoppelt sind oder angepasst sind, um Informationen zu dem mobilen Videomischsystem zu übertragen; und
Erzeugen des Kontextparameters auf Basis der empfangenen Benutzereingabe, Positionierungsinformation, Lichtinformation und/oder Audioinformation.

7. System gemäß einem der Ansprüche 5-6, wobei die Synchronisationsverwaltung angepasst ist zum Berechnen und Kompensieren des Synchronisationsoffsets ($xsync_1$) zwischen einem Referenztakt und Bildrahmen, die von der ersten Videoquelle bzw. der zweiten Videoquelle empfangen wurden (Fig. 8).

8. System gemäß einem der Ansprüche 5-7, wobei die Synchronisationsverwaltung angepasst ist zum Berechnen und Kompensieren des Synchronisationsoffsets zwischen zwei entsprechenden Bildrahmen, die von der ersten Videoquelle bzw. der zweiten Videoquelle empfangen wurden.

9. System gemäß einem der Ansprüche 5-8, wobei die ersten Videoquelle und die zweite Videoquelle Mobiltelefonkameras sind.

10. System gemäß einem der Ansprüche 5-9, wobei der Mischknoten weiterhin angepasst ist zum Steuern der Anzeige der endgültigen gemischten Videoausgabe durch Übertragen der Videoausgabe über Rundfunk oder Streaming über ein Kommunikationsnetzwerk zu einer entfernten Ausgabe.

11. Nicht-flüchtiger computerlesbarer Speicher, umfassend Computerprogrammcode der, wenn durch einen Prozessor ausgeführt, angepasst ist um jedwede oder alle der Verfahrensschritte gemäß den Ansprüchen 1-4 durchzuführen.

**Revendications**

1. Un procédé pour le mixage de signaux vidéo en direct, de séquences de trames d'images représentant une scène ou un événement, et pour traiter un retard dynamique pendant ledit mixage, utilisant un système mobile (100) de mixage de vidéos, le procédé comprenant :

   - le fait de recevoir une séquence de trames d'images à partir d'une première source vidéo (110) ;
   - le fait de recevoir une séquence de trames d'images à partir d'une deuxième source vidéo (110) ;
   - le fait de mixer les séquences de trames vidéo reçues ;

   **caractérisé en ce que** le mixage comprend en outre :

   - à chaque instance de temps :

      i. le fait de recevoir ou d'extraire (240a) un paramètre représentant le contexte de l'utilisation du système mobile de mixage de vidéos ;
      ii. le fait de déterminer si le mixage mobile est réalisé en vue de, ou hors de la vue de, la scène ou de l'événement filmé, sur la base du paramètre de contexte,
      iii. le fait de sélectionner (240b), en fonction de ladite détermination, un mode de mixage vidéo parmi une sélection d'au moins deux modes de mixage vidéos différents, chaque modes de mixage vidéo différents consistant à utiliser une technique de synchronisation différente, qui sélectionne un premier mode de mixage vidéo impliquant une commande de la fréquence d'images s'il est déterminé que le mixage de vidéo mobile est effectué en vue de la scène ou de l'événement filmé ; ou qui sélectionne un deuxième mode de mixage vidéo impliquant une mise en mémoire tampon de trames vidéo s'il est déterminé que le mixage de vidéo mobile est effectué hors de la vue de la scène ou de l'événement filmé, et
      iv. le fait de mixer (240c) les séquences de trames vidéo reçues en fonction du mode de mixage vidéo sélectionné.

2. Le procédé selon l'une quelconque des revendications précédentes, dans lequel le paramètre de contexte est généré en réponse à une sélection de ce qui suit :

   - la réception d'une entrée par l'utilisateur via un ou plusieurs dispositifs d'entrée intégrés au système mobile de mixage de vidéos (100), reliés à celui-ci, ou configurés pour transférer des informations à celui-ci ;
   - la réception d'informations de positionnement à partir d'un dispositif de positionnement intégré au système mobile de mixage de vidéos (100), relié à celui-ci, ou configuré pour transférer des informations à celui-ci, et / ou
   - la réception d'informations audio ou lumineuses relatives au contexte de l'utilisation du système mobile de mixage de vidéos, depuis un ou plusieurs capteurs intégrés au système mobile de mixage de vidéos (100), reliés à celui-ci, ou configurés pour transférer des informations à celui-ci.

3. Le procédé selon l'une quelconque des revendications 1 ou 2, comprenant en outre le fait de calculer et de compenser pour le décalage de synchronisation entre une horloge de référence et des trames d'images reçues de la première source vidéo et de la deuxième source vidéo, respectivement.

4. Le procédé selon l'une quelconque des revendications 1 ou 2, comprenant en outre le fait de calculer et de compenser (230) pour le décalage de synchronisation entre deux trames d'images correspondantes reçues de la première source vidéo et de la deuxième source vidéo, respectivement.

5. Un système mobile de mixage vidéo pour le mixage de signaux vidéo en direct, de séquences de trame d'images représentant une scène ou un événement, et pour traiter un retard dynamique pendant un tel mixage, le système comprenant :

   - une première source vidéo (110) configurée pour capturer une première séquence de trames d'images ;

- une deuxième source vidéo (110) configurée pour capturer une deuxième séquence de trames d'images ;
- un noeud de mixage (120) comprenant un premier récepteur (160) et un deuxième récepteur (160) configurés pour recevoir des trames d'images de ladite première source vidéo et de ladite deuxième source vidéo, respectivement, le noeud de mixage étant configuré pour permettre à un utilisateur d'effectuer un mixage vidéo en temps réel en utilisant un ou plusieurs dispositifs d'entrée intégrés au système de mixage vidéo, reliés à celui-ci ou configurés pour transférer des informations à celui-ci ;

**caractérisé en ce que** :

- un gestionnaire de synchronisation est configuré pour synchroniser les séquences de trames d'images reçues avant mixage ;
- le noeud de mixage est en outre configuré pour, pour chaque instance de temps :

    i. recevoir ou extraire (240a) un paramètre représentant le contexte de l'utilisation du système mobile de mixage de vidéos ;

    ii. déterminer si le mixage mobile est réalisé en vue de, ou hors de la vue de, la scène ou de l'événement filmé, sur la base du paramètre de contexte,

    iii. sélectionner (240b), en fonction de ladite détermination, un mode de mixage vidéo parmi une sélection d'au moins deux modes de mixage vidéo différents, chaque mode de mixage vidéo différent consistant à utiliser une technique de synchronisation différente qui sélectionne un premier mode de mixage vidéo impliquant le contrôle de la commande de la fréquence d'images s'il est déterminé que le mixage de vidéo mobile est effectué en vue de la scène ou de l'événement filmé ; ou qui sélectionne un deuxième mode de mixage vidéo impliquant une mise en mémoire tampon de trames vidéo s'il est déterminé que le mixage de vidéo mobile est effectué hors de la vue de la scène ou de l'événement filmé, et ;

    iv. mixer (240c) les séquences de trames d'images reçues selon le mode de mixage vidéo sélectionné.

6. Le système selon la revendication 5, dans lequel le système de mixage vidéo est configuré pour générer le paramètre de contexte par :

    - la réception d'une entrée par l'utilisateur via un ou plusieurs dispositifs d'entrée intégrés au système mobile de mixage de vidéos, reliés à celui-ci, ou configurés pour transférer des informations à celui-ci ;

    - la réception d'informations de positionnement à partir d'un dispositif de positionnement intégré au système mobile de mixage de vidéos, relié à celui-ci, ou configuré pour transférer des informations à celui-ci, et / ou

    - la réception d'informations audio ou lumineuses relatives au contexte de l'utilisation du système mobile de mixage de vidéos, depuis un ou plusieurs capteurs intégrés au système mobile de mixage de vidéos, reliés à celui-ci, ou configurés pour transférer des informations à celui-ci ; et

générer le paramètre de contexte sur la base de l'entrée d'utilisateur reçue, des informations de positionnement, de l'information lumineuse et / ou de l'information audio.

7. Le système selon l'une quelconque des revendications 5 ou 6, dans lequel le gestionnaire de synchronisation est configuré pour calculer et compenser le décalage de synchronisation ($xsync_1$) entre une horloge de référence et les trames d'images reçues à partir de la première source vidéo et de la deuxième source vidéo, respectivement (Figure 8).

8. Le système selon l'une quelconque des revendications 5 à 7, dans lequel le gestionnaire de synchronisation est configuré pour calculer et compenser le décalage entre deux trames d'images correspondantes reçues de la première source vidéo et de la deuxième source vidéo, respectivement.

9. Le système selon l'une quelconque des revendications 5 à 8, dans lequel la première source vidéo et la deuxième source vidéo sont des caméras de téléphonie mobile.

10. Le système selon l'une quelconque des revendications 5 à 9, dans lequel le noeud de mixage est en outre configuré pour commander la visualisation de la sortie finale de la vidéo mixée, en transférant la sortie vidéo par émission ou diffusion en continu sur un réseau de communications vers une sortie éloignée.

11. Une mémoire lisible d'ordinateur non transitoire comprenant un code de programme d'ordinateur qui, lorsqu'il est exécuté dans un processeur, est configuré pour exécuter tout ou partie des étapes du procédé selon les revendications 1 à 4.

Fig. 1

EP 2 713 609 B1

Fig. 2a

220

240

240a

240b

240c

Fig. 2b

220

230a

230b

240

EP 2 713 609 B1

High Delay

Asynchrony ← → Synchrony

⊗ Ideal/
Professional
Systems

Low Delay

Fig. 3A

Smooth

Asynchrony ← → Synchrony

⊗ Ideal/
Professional
Systems

Jerky

Fig. 3B

Fig. 4

EP 2 713 609 B1

Fig. 5

Fig. 6

Fig. 7

EP 2 713 609 B1

REFERENCE CLOCK

$T_i$

$T_C$

STREAM

$Xsync_i$

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2403236 A1
- US 2002170067 A1
- WO 2011017460 A1
- CN 101662676 A
- CN 101600099

### Non-patent literature cited in the description

- **A. ENGSTROM ; O. JUHLIN ; E. REPONEM.** Mobile broadcasting - The whats and hows of live video as a social medium. *Proc of Mobile HCI,* 07 September 2010
- **ENGSTRÖM A. ; PERRY M. ; JUHLIN, O.** Amateur Vision and Recreational Orientation: creating live video together. *proc. of CSCW 2012,* 2012
- **ARVID ENGSTROM et al.** Producing collaborative video. *PROCEEDING OF THE 1ST INTERNATIONAL CONFERENCE ON DESIGNING INTERACTIVE USER EXPERIENCES FOR TV AND VIDEO. UXTV,* 01 January 2008, vol. 108, 115-124
- **ELHAJJ I H et al.** Real-Time Adaptive Content-Based Synchronization of Multimedia Streams. *ADVANCES IN MULTIMEDIA,* 31 December 2011, vol. 2011, 1-13
- Real-Time Adaptive Content-Based Synchronization of Multimedia Streams. **ELHAJJ et al.** Advances in Multimedia. Hindawi Publishing Corporation, vol. 2011